# EUROPEAN PATENT APPLICATION

(11) **EP 4 822 693 A1**
(43) Date of publication of application: **14.10.2026**
(21) Application number: 26171129.5
(22) Date of filing: 08.04.2026
(51) Int. Cl.: G11B 27/031, G06T 11/60, G11B 27/34, H04N 5/272

(54) **SELF-CAPTURE DIGITAL OVERLAY**

(30) Priority: 11.04.2025 US 202519176999
(71) Applicant: Google LLC, Mountain View, CA 94043 (US)
(72) Inventor: Morris, Tiffany, Mountain View, 94043 (US); Walsh, Shadia, Mountain View, 94043 (US); Krishna, Golden Gopal, Mountain View, 94043 (US); Chan, Clifford Tse Yan, Mountain View, 94043 (US); Duraiswami, Lily, Mountain View, 94043 (US); Borg, Carl Magnus, Mountain View, 94043 (US); Liu, Yi Jo, Mountain View, 94043 (US); Gundersen, James Ivar, Mountain View, 94043 (US)
(74) Representative: Marks & Clerk GST

(57) **Abstract**

An example method includes generating, by a computing device, a foreground data stream by at least removing a background region of video input, where the video input is received via a camera component of the computing device. The method also includes generating, by the computing device, a background data stream via a graphics component of the computing device. The background data stream is associated with content generated by an application executing at the computing device. The method additionally includes generating, by the computing device, video content by at least superimposing a first layer over a second layer, the first layer associated with the foreground data stream and the second layer associated with the background data stream. The method further includes outputting, by a display of the computing device, a graphical user interface that includes a viewing region for displaying the video content.

## Description

### BACKGROUND

Content creators often produce and share original content across digital platforms, the original content including videos, images, blogs, podcasts, and more. Content creators may use content creation software to produce engaging material tailored to the content creator's audience, where the material may focus on niches such as education, entertainment, gaming, or lifestyles. Many content creators leverage social media, streaming services, and content sharing platforms to distribute material, connect with audience members, and monetize content through ads, sponsorships, and subscriptions.

### SUMMARY

In general, aspects of this disclosure are directed to techniques for superimposing video input. For example, a device may generate combined video content by superimposing a first layer over a second layer. The first layer may include only an actor region (e.g., only pixels including a content creator) of video content recorded by a camera. The second layer may include media content accessed by the device (e.g., video game content, news articles, etc.). For example, the combined video content may be of a content creator, in the foreground, reacting to a video game played in the background. In this way, the content creator can provide commentary, explanations, and reactions while remaining visually tied to content being presented.

The device may offer various functionalities associated with the combined video content. For example, the device may provide a user interface for viewing and editing the combined video content, as well as uploading the content to a content sharing service. As another example, the device may offer services for adding suggestive actions to the combined video content based on metadata of the background content. Additionally, the device may apply visual effects to the combined video content based on a user's gestures. The device may also be configured to upload the combined video content to a content sharing service in substantially real-time.

In one example, the disclosure is directed toward a method that includes generating, by a computing device, a foreground data stream by at least removing a background region of video input, the video input received via a camera component of the computing device. The method further includes generating, by the computing device, a background data stream via a graphics component of the computing device, the background data stream associated with content generated by an application executing at the computing device. The method also includes generating, by the computing device, video content by at least superimposing a first layer over a second layer, the first layer associated with the foreground data stream and the second layer associated with the background data stream. The method additionally includes outputting, by a display of the computing device, a graphical user interface that includes a viewing region for displaying the video content.

Optionally, the method may comprise one or more of the following features. The method may further comprise determining, by the computing device, whether the foreground data stream is associated with a gesture motion; and responsive to determining that the foreground data stream is associated with the gesture motion, applying, by the computing device, a graphical effect to the video content based on the gesture motion. The graphical effect may be a markup effect. The graphical effect may be an image-resizing effect. The method may further comprise determining, by the computing device, one or more suggestive actions based on metadata associated with the background data stream; and superimposing, by the computing device, one or more suggestive graphical elements over the video content, each suggestive graphical element of the one or more suggestive graphical elements based on a respective suggestive action of the one or more suggestive actions. The graphical user interface may further include a layer-editing region for displaying one or more layer-editing graphical elements, each of the one or more layer-editing graphical elements associated with a respective layer of the video content. The method may further comprise generating, by the computing device via a machine learning model, one or more effects based on the video content, and applying, by the computing device, the one or more effects to the video content. The method may further comprise uploading, by the computing device, the video content to a content sharing platform. The method may further comprise receiving, by the computing device, interaction data, the interaction data including text data provided by one or more user devices receiving the video content via the content sharing platform; and generating, by the computing device, a third layer superimposing the first layer and the second layer, the third layer including one or more interaction graphical elements associated with the text data.

In another example, the disclosure is directed toward a computing device comprising one or more processors, and one or more storage devices that store instructions. The instructions, when executed by the one or more processors, cause the one or more processors to generate a foreground data stream by at least removing a background region of video input, the video input received via a camera component of the computing device. The instructions further cause the one or more processors to generate a background data stream via a graphics component of the computing device, the background data stream associated with content generated by an application executing at the computing device. The instructions also cause the one or more processors to generate video content by at least superimposing a first layer over a second layer, the first layer associated with the foreground data stream and the second layer associated with the background data stream. The instructions additionally cause the one or more processors to output a graphical user interface that includes a viewing region for displaying the video content.

Optionally, the computing device may comprise one or more of the following features. The instructions may further cause the one or more processors to determine whether the foreground data stream is associated with a gesture motion; and responsive to determining that the foreground data stream is associated with the gesture motion, apply a graphical effect to the video content based on the gesture motion. The graphical effect may be a markup effect. The graphical effect may be an image-resizing effect. The instructions may further cause the one or more processors to determine one or more suggestive actions based on metadata associated with the background data stream; and superimpose one or more suggestive graphical elements over the video content, each suggestive graphical element of the one or more suggestive graphical elements based on a respective suggestive action of the one or more suggestive actions. The graphical user interface may further include a layer-editing region for displaying one or more layer-editing graphical elements, each of the one or more layer-editing graphical elements associated with a respective layer of the video content. The instructions may further cause the one or more processors to generate, via a machine learning model, one or more effects based on the video content, and apply the one or more effects to the video content. The instructions may further cause the one or more processors to upload the video content to a content sharing platform. The instructions may further cause the one or more processors to receive interaction data, the interaction data including text data provided by one or more user devices receiving the video content via the content sharing platform; and generate a third layer superimposing the first layer and the second layer, the third layer including one or more interaction graphical elements associated with the text data.

In another example, the disclosure is directed toward a non-transitory computer-readable storage medium encoded with instructions that, when executed by one or more processors of a computing device, cause the one or more processors to generate a foreground data stream by at least removing a background region of video input, the video input received via a camera component of the computing device. The instructions further cause the one or more processors to generate a background data stream via a graphics component of the computing device, the background data stream associated with content generated by an application executing at the computing device. The instructions also cause the one or more processors to generate video content by at least superimposing a first layer over a second layer, the first layer associated with the foreground data stream and the second layer associated with the background data stream. The instructions additionally cause the one or more processors to output a graphical user interface that includes a viewing region for displaying the video content.

In another example, the disclosure is directed toward a computer program product for producing video content. The computer program product comprises one or more instructions that, when executed by at least one processor of a computing device, cause the at least one processor to generate a foreground data stream by at least removing a background region of video input, the video input received via a camera component of the computing device. The one or more instructions further cause the at least one processor to generate a background data stream via a graphics component of the computing device, the background data stream associated with content generated by an application executing at the computing device. The one or more instructions also cause the at least one processor to generate video content by at least superimposing a first layer over a second layer, the first layer associated with the foreground data stream and the second layer associated with the background data stream. The one or more instructions additionally cause the at least one processor to output a graphical user interface that includes a viewing region for displaying the video content.

The details of one or more examples of the disclosure are set forth in the accompanying drawings and the description below. Other features, objects, and advantages of the disclosure will be apparent from the description and drawings, and from the claims.

### BRIEF DESCRIPTION OF THE FIGURES

FIG. 1 is a conceptual diagram illustrating an example computing device for superimposing self-capture content over a digital background, in accordance with one or more techniques of this disclosure.
FIGS. 2A-2D are conceptual diagrams illustrating layers and graphical elements for superimposition, in accordance with one or more techniques of this disclosure.
FIG. 3 is a conceptual diagram illustrating another example computing device for superimposing self-capture content over a digital background, in accordance with one or more techniques of this disclosure.
FIG. 4 is a conceptual diagram illustrating a timeline graphical user interface (GUI) for editing video content, in accordance with one or more techniques of this disclosure.
FIG. 5 is a conceptual diagram illustrating various devices in communication with a content sharing platform via a network, in accordance with one or more techniques of this disclosure.
FIG. 6A is a conceptual diagram illustrating a capture mode GUI superimposing created content, in accordance with one or more techniques of this disclosure.
FIG. 6B is a conceptual diagram illustrating created content, in accordance with one or more techniques of this disclosure.
FIG. 7A is a conceptual diagram illustrating a capture mode GUI, in accordance with one or more techniques of this disclosure.
FIG. 7B is a conceptual diagram illustrating a content consumer GUI including a suggestive graphical element, in accordance with one or more techniques of this disclosure.
FIG. 8A is a conceptual diagram illustrating a capture mode GUI including interaction graphical elements, in accordance with one or more techniques of this disclosure.
FIG. 8B is a conceptual diagram illustrating a content consumer GUI including interaction graphical elements, in accordance with one or more techniques of this disclosure.
FIG. 9 is a flowchart illustrating an example operation for superimposing self-capture content over a digital background, in accordance with one or more techniques of this disclosure.

### DETAILED DESCRIPTION

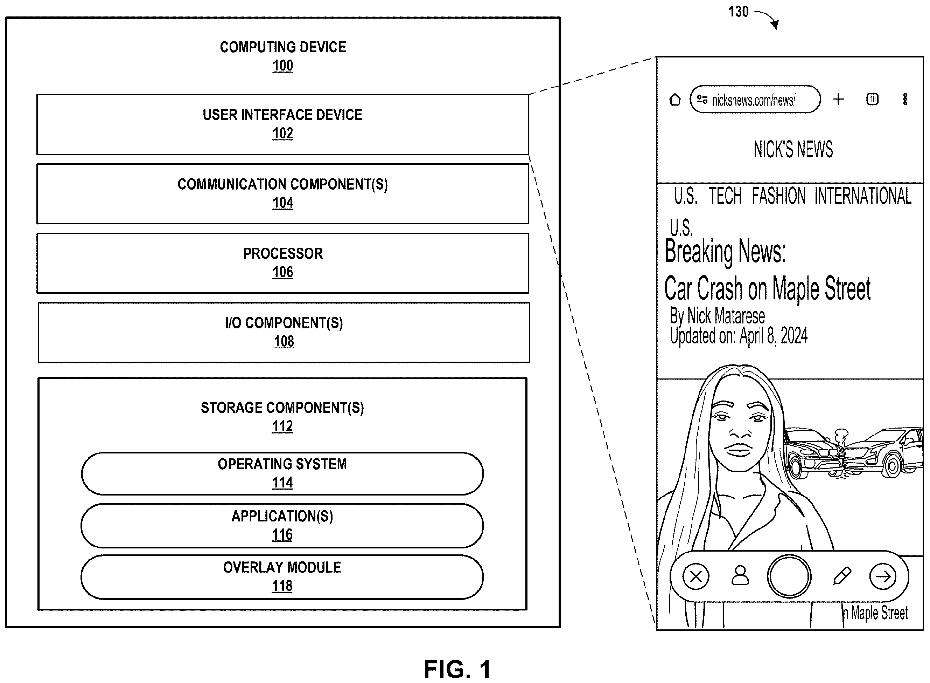

FIG. 1 is a conceptual diagram illustrating an example computing device for superimposing self-capture content over a digital background, in accordance with one or more techniques of this disclosure. In the example of FIG. 1, computing device 100 may be an individual mobile or non-mobile computing device. Examples of computing device 100 include a mobile phone, a tablet computer, a laptop computer, a desktop computer, a server, a mainframe, a set-top box, a television, a wearable device (e.g., a computerized watch, computerized eyewear, computerized headphones, computerized gloves, computerized ring, etc.), a home automation device or system (e.g., an intelligent thermostat or home assistant device), a gaming system, a media player, an e-book reader, a mobile television platform, an augmented reality device, a virtual reality device, a mixed reality device, an automobile navigation or infotainment system, or any other type of mobile, non-mobile, wearable device, or non-wearable device configured to superimpose self-capture content over a digital background in accordance with techniques of this disclosure. Computing device 100 may implement various compute resources, such as processors, memory, data storage, data buses, input/output controllers, network interfaces, accelerators (e.g., graphics accelerators), and power management units.

Computing device 100 includes user interface (UI) device 102. UI device 102 may function as an input and/or output device for computing device 100 and may be implemented using various technologies. For instance, UI device 102 may function as an input device using a presence-sensitive display, microphone technologies, infrared sensor technologies, or other input device technology for use in receiving user input. UI device 102 may function as an output device configured to present output to a user using any one or more display devices (e.g., the presence-sensitive display), speaker technologies, haptic feedback technologies, or other output device technology for use in outputting information to a user. In the example illustrated with respect to FIG. 1, UI device 102 displays graphical user interface (GUI) 130.

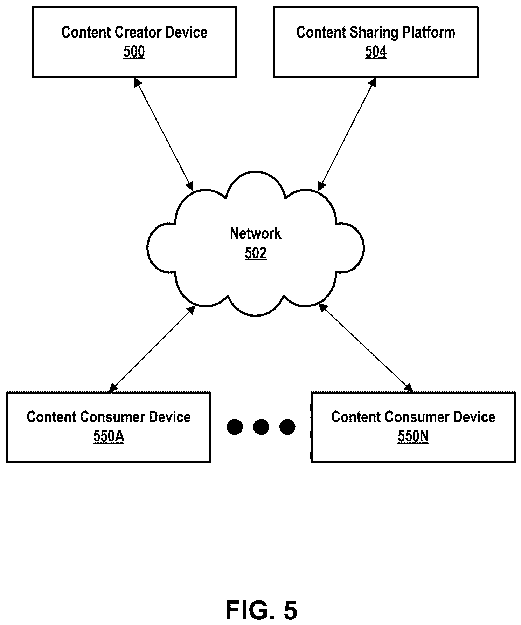

One or more communication components 104 of computing device 100 may communicate with external devices via one or more wired and/or wireless networks by transmitting and/or receiving network signals on the one or more networks. Examples of communication components 104 include a network interface card (e.g., an Ethernet card), an optical transceiver, a radio frequency transceiver, a global positioning system (GPS) receiver, or any other type of device that can send and/or receive information. Other examples of communication components 104 may include short wave radios, cellular data radios, wireless network radios, as well as universal serial bus (USB) controllers. As explained with respect to FIG. 5, computing device 100 may implement communication components 104 to communicate with a content sharing platform via a network.

Processor 106 may implement functionality and/or execute instructions within computing device 100. For example, processor 106 may be a central processing unit (CPU), graphics processing unit (GPU), application processor (AP), digital signal processor (DSP), neural processing unit (NPU), image signal processor (ISP), or microcontroller unit (MCU). Processor 106 may implement computational components such as arithmetic logic units, control units, registers, pipelines, execution cores, caches (e.g., L1, L2, and L3), and branch predictors. Processor 106 may operate based on a fetch-decode-execute cycle, where processor 106 retrieves instructions from memory, decodes the instructions into operations, and executes the instructions via various functional units. Further, processor 106 may implement an instruction set that defines software and hardware communication at a binary level. In some implementations, processor 106 may include multiple cores and may support multiple threads, and may perform techniques such as parallel processing, graphics rendering, and multimedia processing.

Processor 106 may execute program code associated with operating system (OS) 114 and/or applications 116. OS 114 and applications 116 may perform operations described herein using software, hardware, firmware, or a mixture of hardware, software, and firmware residing in and/or executing at computing device 100 or processor 106. In some implementations, processor 106 may execute OS 114 and applications 116 as virtual machines executing on underlying hardware, as one or more services of an OS or computing platform, and/or as one or more executable programs at an application layer of processor 106.

One or more input/output (I/O) components 108 may receive input and/or provide output for computing device 100. I/O components 108 may provide output by, for example, making information perceivable to an external component or user. I/O components 108 may convert data produced by computing device 100 into a user-understandable or machine-interpretable format, such as a visual, audio, or physical format. Examples of output components of I/O components 108 include audio output devices (e.g., speakers and headphones), haptic output devices, printers, actuators, network interfaces, and storage devices. I/O components 108 may also provide input for computing device 100 by, for example, converting external signals into machine-readable formats. Examples of input components of I/O components 108 include game controllers, audio input devices (e.g., microphones), image input devices (e.g., cameras and scanners), thermometers, accelerometers, motion detectors, biometric devices, network interfaces, rotating crown buttons, push buttons, and storage devices.

Computing device 100 may write data to or read data from one or more storage components 112, where storage components 112 may include OS 114 and applications 116. For example, storage components 112 may store execution code associated with OS 114 and applications 116. Storage components 112 may include one or more hard disk drives, solid-state drives, hybrid drives, removable media drives, optical drives, and/or any other device configured to store information. In some implementations, storage components 112 may be configured for short-term storage of information as volatile memory and therefore may not retain stored contents if powered off. Examples of volatile memories include random access memory (RAM), dynamic random-access memory (DRAM), and static random-access memory (SRAM).

OS 114 manages hardware resources and may provide a platform for software execution at processor 106. OS 114 may perform scheduling algorithms (e.g., round-robin and multilevel queues), allocate memory via virtual memory management and paging mechanisms, and facilitate interprocess communication (IPC) via message queues, pipes, and shared memory. OS 114 may implement preemptive multitasking, real-time scheduling for deterministic latency, and dynamic power management to improve performance and power consumption of processor 106.

Applications 116 may be first-party, second-party, or third-party applications of computing device 100. Applications 116 may extend software functionality of processor 106, where applications 116 may execute within an execution environment presented by OS 114. Applications 116 may, as a few examples, provide gaming services (e.g., video games), email services, web browsing services, texting and/or chat services, web conferencing services, video conferencing services, music services (including streaming music services), video services (including video streaming services), navigation services, weather services, word processing services, spreadsheet services, slide and/or presentation services, assistant services, text entry services, network access services, or any other application service.

Overlay module 118 may include software components for superimposing self-capture content over a digital background. In some implementations, overlay module 118 may be an application of applications 116. In still some implementations, overlay module 118 may be a component of OS 114. Overlay module 118 may receive data streams from one or more components of computing device 100, where the data streams are associated with media content (e.g., visual, audio, and/or haptic content).

By superimposing self-capture content over a digital background, overlay module 118 enables content creators to provide commentary, explanations, and reactions while remaining visually tied to content being presented. In one example, a content creator may intend to create content to upload to a content sharing platform. The content creator reads an online news article about a car crash and feels inspired to provide commentary regarding the news article to a virtual audience. The content creator may first invoke overlay module 118 via an application of applications 116 and/or a component of OS 114. For example, the content creator may invoke overlay module 118 via a navigation menu displayed by UI device 102. Additionally, or alternatively, the content creator may invoke overlay module 118 by holding a push button of I/O components 108.

After the content creator invokes overlay module 118, UI device 102 may display a GUI associated with overlay module 118 (e.g., GUI 130). GUI 130 may include various graphical elements for using functionalities of overlay module 118. For example, GUI 130 may include a start button element. After the content creator selects the start button element, computing device 100 may generate a foreground data stream by removing a background region of video input received via a camera component of I/O components 108. For instance, the content creator may face themselves in front of a camera component of I/O components 108 after selecting the start button. Computing device 100 may then capture video input, where the video input includes video of the content creator and additional background elements.

To remove the background region, computing device 100 may use one or more techniques. In some implementations, a camera component captures a continuous stream of video frames, each consisting of pixel data representing color and brightness values. Computing device 100 may then process each frame by separating an actor region (e.g., a region of the frame including the content creator, the content creator's clothing, elements between the content creator and computing device 100, and/or accessories worn by the content creator) from a background region (e.g., a region of the frame not including the content creator, the content creator's clothing, objects between the content creator and computing device 100, and/or accessories worn by the content creator).

To separate the actor region from the background region in a frame, computing device 100 may use one or more frame segmentation techniques. For instance, computing device 100 may use chroma keying by separating pixels of a color range from pixels outside of the color range. Additionally, or alternatively, computing device 100 may use machine learning models (e.g., deep learning-based models using convolutional neural networks) to analyze the video frame and distinguish the actor region from the background region.

Computing device 100 may then generate a mask that defines which pixels of the frame belong to the foreground region and which pixels belong to the background region. Computing device 100 may further refine the mask using techniques such as edge smoothing and noise reduction. Then, computing device 100 may remove the background region from the foreground region by replacing the background region with a transparent region. The resulting frame-data may then be provided to overlay module 118 as a part of the foreground data stream.

Computing device 100 may also generate a background data stream via a graphics component of computing device 100, where the background data stream may be associated with content generated by an application of applications 116 and/or by OS 114. For example, after selecting the start button element, computing device 100 may begin to capture digital content displayed by an active application of applications 116. Examples of digital content include video game content, web content, art content, film/television content, streaming media content, social media content, UI content, simulation content, and/or digital publication content. For instance, computing device 100 may generate the background data stream based on graphical content associated with a web site displayed by UI device 102. If the content creator navigates to a different application or OS component, computing device 100 may generate the background data stream based on graphical content associated with the different application or OS component.

Overlay module 118 may generate a combined data stream by superimposing a layer associated with the foreground data stream over a layer associated with the background data stream. For instance, the combined data stream may include frame data, where each frame depicts the content creator overlaying digital content displayed, accessed, and/or generated by computing device 100. Furthermore, the combined data stream may include or be associated with additional data. For example, the combined data stream may also include audio data generated via a microphone component of I/O components 108. The audio data may additionally or alternatively be generated by an application or OS component of computing device 100.

UI device 102 may display GUI 130, where GUI 130 includes a viewing region for displaying video content generated based on the combined data stream. As shown in FIG. 1, GUI 130 includes a viewing region showing a content creator superimposing a web article. In some implementations, GUI 130 may include graphical elements other than the viewing region, e.g., UI elements for utilizing functionality of overlay module 118.

After selecting the start button element, the content creator may then use computing device 100 to generate media content to share with the content creator's virtual audience. For example, computing device 100 may store part or all of the combined data stream as video content within storage components 112. The content creator may edit the video data before uploading the video data to a content sharing platform for access by audience members. Additionally, or alternatively, computing device 100 may continuously upload all or part of the combined data stream to the content sharing platform as video content while the combined data stream is generated by overlay module 118. Computing device 100 may continuously generate the combined data stream until receiving user input for stopping or pausing the combined data stream. In this way, the content creator may quickly and easily create presentation content using computing device 100, where the presentation content enables the content creator to remain visually associated with content being presented.

By enabling the content creator to quickly and easily create the presentation content, computing device 100 conserves considerable energy. For instance, to create comparable presentation content without using the techniques described herein, the content creator may first need to record the content creator's visual reactions and commentary. The content creator may then have to use a dedicated application or OS component to screen capture digital content. Then, the content creator may need use editing applications and/or OS components to create presentation content. By implementing the techniques described herein, each step for creating presentation content may take place concurrently, therefore expediting the creation process. This expedited creation process enables computing device 100 to be in an active mode for substantially less time compared to other computing devices, which in turn conserves battery power of computing device 100.

Furthermore, aspects of the present disclosure may reduce the processing power specified for creating presentation content (e.g., video content). As discussed, without using the techniques described herein, the content creator may need to perform various steps via a computing device to create comparable presentation content that may be generated in substantially real-time using computing device 100. These various steps require intercommunication between different applications, such as camera applications, screen capture applications, video editing applications, and content sharing applications. The different applications may be developed as stand-alone applications, and therefore may be less efficient in creating presentation content as compared to the components of computing device 100. For example, a screen capture application may record display data in a format not supported by a video editing application. The display data may therefore need to be converted to an appropriate format prior to editing, the conversion process using additional power, processor utilization, and memory bandwidth. By creating presentation content in substantially real-time using fewer independent components, computing device 100 may conserve this power, processor utilization, and memory bandwidth.

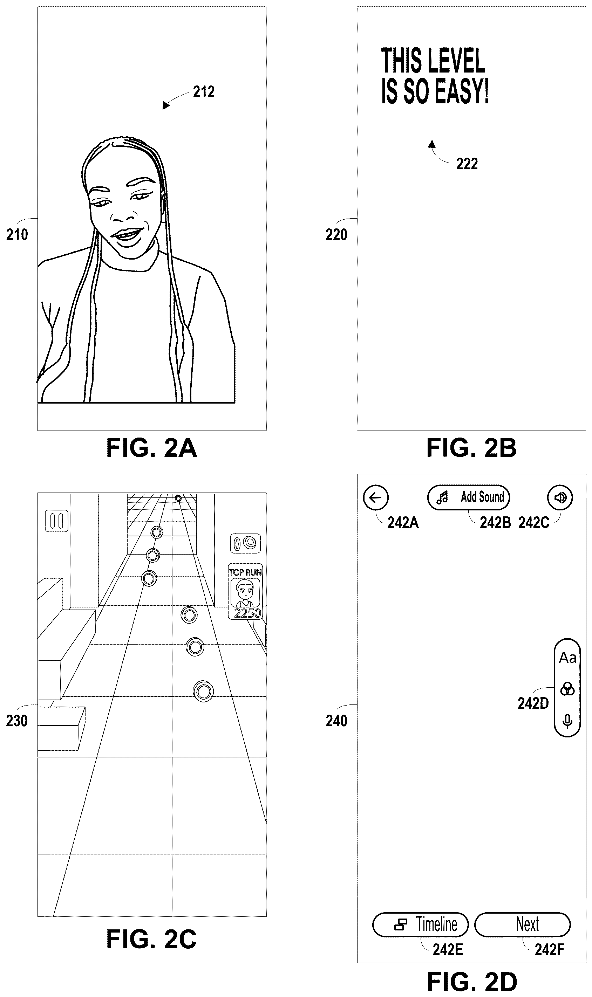

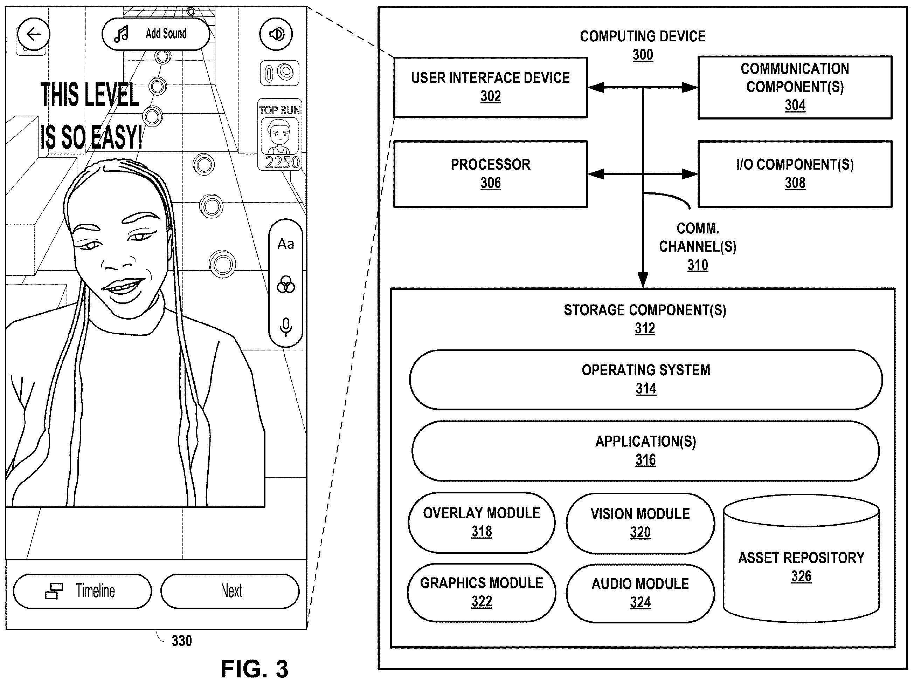

FIGS. 2A-2D are conceptual diagrams illustrating layers and graphical elements for superimposition, in accordance with one or more techniques of this disclosure. FIG. 2A includes first layer 210, where first layer 210 includes actor region 212. FIG. 2B includes second layer 220, where second layer 220 includes text element 222. FIG. 2C includes third layer 230. FIG. 2D includes editing mode GUI 240, where editing mode GUI 240 includes GUI elements 242A-F (collectively, "GUI elements 242"). The various layers and graphical elements of FIGS. 2A-2D are further discussed with respect to FIG. 3.

FIG. 3 is a conceptual diagram illustrating another example computing device for superimposing self-capture content over a digital background, in accordance with one or more techniques of this disclosure. FIG. 3 includes computing device 300. Computing device 300 may be an individual mobile or non-mobile computing device. Examples of computing device 300 include a mobile phone, a tablet computer, a laptop computer, a desktop computer, a server, a mainframe, a set-top box, a television, a wearable device (e.g., a computerized watch, computerized eyewear, computerized headphones, computerized gloves, computerized ring, etc.), a home automation device or system (e.g., an intelligent thermostat or home assistant device), a gaming system, a media player, an e-book reader, a mobile television platform, an augmented reality device, a virtual reality device, a mixed reality device, an automobile navigation or infotainment system, or any other type of mobile, non-mobile, wearable device, or non-wearable device configured to superimpose self-capture content over a digital background in accordance with techniques of this disclosure. Computing device 300 may implement various compute resources, such as processors, memory, data storage, data buses, input/output controllers, network interfaces, accelerators (e.g., graphics accelerators), and power management units.

Computing device 300 includes UI device 302. UI device 302 may function as an input and/or output device for computing device 300 and may be implemented using various technologies. For instance, UI device 302 may function as an input device using a presence-sensitive display, microphone technologies, infrared sensor technologies, or other input device technology for use in receiving user input. UI device 302 may function as an output device configured to present output to a user using any one or more display devices (e.g., a presence-sensitive display), speaker technologies, haptic feedback technologies, or other output device technology for use in outputting information to a user. In some implementations, UI device 302 may be a component of input/output (I/O) components 308. In the example illustrated with respect to FIG. 3, UI device 302 displays GUI 330.

One or more communication components 304 of computing device 300 may communicate with external devices via one or more wired and/or wireless networks by transmitting and/or receiving network signals on the one or more networks. Examples of communication components 304 include network interface cards (e.g., Ethernet cards), optical transceivers, radio frequency transceivers, GPS receivers, or any other type of device that can send and/or receive information. Other examples of communication components 304 may include short wave radios, cellular data radios, wireless network radios, as well as USB controllers.

Processor 306 may implement functionality and/or execute instructions within computing device 300. For example, processor 306 may be a CPU, GPU, AP, DSP, NPU, ISP, or MCU. Processor 306 may implement computational components such as arithmetic logic units, control units, registers, pipelines, execution cores, caches (e.g., L1, L2, and L3), and branch predictors. Processor 306 may operate based on a fetch-decode-execute cycle, where processor 306 retrieves instructions from memory, decodes the instructions into operations, and executes the instructions via various functional units. Further, processor 306 may implement an instruction set that defines software and hardware communication at a binary level. In some implementations, processor 306 may include multiple cores and may support multiple threads, and may perform techniques such as parallel processing, graphics rendering, and multimedia processing.

One or more I/O components 308 may receive input and/or provide output for computing device 300. I/O components 308 may provide output by, for example, making information perceivable to an external component or user. I/O components 308 may convert data produced by computing device 300 into a user-understandable or machine-interpretable format, such as a visual, audio, or physical format. Examples of output components of I/O components 308 include audio output devices (e.g., speakers and headphones), haptic output devices, printers, actuators, network interfaces, and storage devices. I/O components 308 may also provide input for computing device 300 by, for example, converting external signals into machine-readable formats. Examples of input components of I/O components 308 include game controllers, audio input devices (e.g., microphones), image input devices (e.g., cameras and scanners), thermometers, accelerometers, motion detectors, biometric devices, network interfaces, rotating crown buttons, push buttons, and storage devices.

Communication channels 310 may interconnect each of UI device 302, communication components 304, processor 306, I/O components 308, and storage components 312 for inter-component communication (physically, communicatively, and/or operatively). In some examples, communication channels 310 may include a system bus, a network connection, an inter-process communication data structure, or any other method for communicating data.

Computing device 300 may write data to or read data from one or more storage components 312, where storage components 312 may store execution code and/or other data associated with OS 314, applications 316, overlay module 318, vision module 320, graphics module 322, audio module 324, and asset repository 326. Storage components 312 may include one or more hard disk drives, solid-state drives, hybrid drives, removable media drives, optical drives, and/or any other device configured to store information. In some implementations, storage components 312 may be configured for short-term storage of information as volatile memory and therefore may not retain stored contents if powered off. Examples of volatile memories include RAM, DRAM, and SRAM.

Processor 306 may execute program code associated with one or more of OS 314, applications 316, overlay module 318, vision module 320, graphics module 322, and audio module 324. OS 314, applications 316, overlay module 318, vision module 320, graphics module 322, and audio module 324, may perform operations described herein using software, hardware, firmware, or a mixture of hardware, software, and firmware residing in and/or executing at computing device 300 or processor 306. In some implementations, processor 306 may execute OS 314, applications 316, overlay module 318, vision module 320, graphics module 322, and audio module 324, as virtual machines executing on underlying hardware, as one or more services of an OS or computing platform, and/or as one or more executable programs at an application layer of processor 306.

OS 314 manages hardware resources and may provide a platform for software execution at processor 306. OS 314 may perform scheduling algorithms (e.g., round-robin and multilevel queues), allocate memory via virtual memory management and paging mechanisms, and facilitate IPC via message queues, pipes, and shared memory. OS 314 may implement preemptive multitasking, real-time scheduling for deterministic latency, and dynamic power management to improve performance and power consumption of processor 306.

Applications 316 may be first-party, second-party, or third-party applications of computing device 300. Applications 316 may extend software functionality of processor 306, where applications 316 may execute within an execution environment presented by OS 314. Applications 316 may, as a few examples, provide gaming services (e.g., video games), email services, web browsing services, texting and/or chat services, web conferencing services, video conferencing services, music services (including streaming music services), video services (including video streaming services), navigation services, weather services, word processing services, spreadsheet services, slide and/or presentation services, assistant services, text entry services, network access services, or any other application service.

Overlay module 318 may include software components for superimposing self-capture content over a digital background. Overlay module 318 may receive data streams from one or more components of computing device 300, where the data streams are associated with media content (e.g., visual, audio, and/or haptic content). Overlay module 318 may create combined data streams by, for example, superimposing content associated with a first data stream over content associated with a second data stream.

Vision module 320 may provide a foreground data stream to overlay module 318 based on images (e.g., frames of a video) captured by a camera component of I/O components 308. In some implementations, vision module 320 provides functionality for selectively showing or hiding parts of an image. For example, vision module 320 may receive a frame and create a mask for the frame, where the mask defines which pixels of the frame belong to a foreground region and which pixels belong to a background region. Vision module 320 may further refine the mask using techniques such as edge smoothing and noise reduction. Additionally, vision module 320 may remove the background region from the foreground region by replacing the background region with a transparent region. Vision module 320 may then provide the resulting frame-data to overlay module 318 as data of a data stream (e.g., a foreground data stream).

Graphics module 322 provides functionality for generating or capturing a data stream associated with a graphics component of computing device 300. The graphics component may be a hardware component such as processor 306. Additionally, or alternatively, the graphics component may be a software component for producing graphical data. For instance, the graphics component may be a graphics application programming interface (API), graphics driver, or a rendering engine. In some implementations, graphics module 322 receives frame data generated by processor 306, where the frame data is associated with an application or OS component of computing device 300. Graphics module 322 may then provide the resulting frame data to overlay module 318 as data of a data stream (e.g., a background data stream). In still some implementations, graphics module 322 receives frame data of graphical content generated for display by UI device 302. In this way, graphics module 322 may act as a content-capture component by receiving content for display at UI device 302 and providing some or all the content to overlay module 318 as a data stream (e.g., a background data stream).

Audio module 324 provides functionality for generating or capturing a data stream associated with audio data generated, stored, or received at computing device 300. For example, audio module 324 may receive audio data associated with an application or OS component. Additionally, or alternatively, audio module 324 may receive audio data generated via a microphone component of I/O components 308. Audio module 324 may provide the audio data to overlay module 318 as a data stream (e.g., an audio data stream).

Asset repository 326 may store assets for use by overlay module 318 in generating content. For example, asset repository 326 may store graphic design and image editing assets such as fonts, typefaces, brushes, textures, patterns, icons, vectors, stock images, and color palettes. Additionally, asset repository 326 may store video editing and motion graphics assets such as stock footage, transitions, effects, and overlays. Asset repository 326 may also store 3-dimensional (3D) modeling and animation assets such as 3D models, textures, materials, rigged characters, motion capture data, and particle effects. Furthermore, asset repository may store audio production and music creation assets such as audio samples, loops, virtual instruments, and preset libraries.

In some implementations, one or more of overlay module 318, vision module 320, graphics module 322, and audio module 324 may execute as part of an application or applications of application 316. For example, overlay module 318, vision module 320, graphics module 322, and audio module 324 may be components of a content creation application. In still some implementations, one or more of overlay module 318, vision module 320, graphics module 322, and audio module 324 may execute as a component or components of OS 314. For instance, overlay module 318, vision module 320, graphics module 322, and audio module 324 may each be components of OS 314. As another example, overlay module 318 and vision module 320 may be components of an application, while graphics module 322 and audio module 324 may be OS components. It is also conceived that overlay module 318, vision module 320, graphics module 322, and/or audio module 324 may be standalone components stored at storage components 312 and executed by processor 306.

According to various techniques of the present disclosure, a user may create content via one or more applications and/or OS components of computing device 300. The application(s) and/or OS component(s) may implement functionality and/or assets provided by one or more of overlay module 318, vision module 320, graphics module 322, audio module 324, and asset repository 326, where overlay module 318, vision module 320, graphics module 322, audio module 324, and/or asset repository 326 may be part of the application(s) and/or OS component(s). For ease of explanation, the application(s) and/or OS component(s) may be referred to as a content creation platform.

A user may initiate (e.g., launch) the content creation platform by selecting a content creation application via UI device 302 and/or I/O components 308. Additionally, or alternatively, a user may initiate the content creation platform via input provided via I/O components 308, where the input is associated with or dedicated to the content creation platform. For example, a user may initiate the content creation platform by holding a push button of I/O components 308.

In response to a user initiating the content creation platform, the content creation platform may initiate a capture mode. Additionally, or alternatively, the content creation platform may enable the user to initiate the capture mode by providing input. For example, a user may select a graphical element displayed by UI device 302, where the graphical element is associated with the capture mode. While computing device 300 operates in the capture mode, the content creation platform may record two or more data streams of media content to create two or more layers. A first layer may be associated with a foreground data stream, while a second layer may be associated with a background data stream. The content creation platform may then generate media content by superimposing the two or more layers. In some implementations, each layer of the two or more layers may be associated with one or more data streams and/or one or more graphical elements received or generated by the content creation platform.

A layer may be a group of one or more media elements and/or UI elements. Layers may be combined via, e.g., graphical superimposition and/or audio overlay, to create media content. In some examples, layers are associated with media content captured, generated, or processed by a component of computing device 300 and provided to overlay module 318. For example, first layer 210 may be associated with a foreground data stream, where vision module 320 may provide the foreground data stream based on video content captured by a camera component of I/O components 308. As shown with respect to FIG. 2A, vision module 320 may first remove a background portion of graphical content associated with the video content. Second layer 220 may be associated with user-inserted graphical elements, such as text element 222. A user may insert text element 222 and/or other graphical elements within second layer 220 via functionality offered by the content creation platform.

Third layer 230 may be associated with a background data stream provided by graphics module 322. The background data stream may be associated with an active application or OS component of computing device 300. In some implementations, graphics module 322 may act as a screen-capture component, wherein graphics module 322 provides the background data stream based on content displayed by UI device 302 or generated for display via UI device 302. For example, the background data stream may include data transmitted to UI device 302 for display. In this example, graphics module 322 may remove designated graphical elements or otherwise provide the background data stream as not having the designated graphical elements. For instance, the background data stream may include graphical information from an application while excluded graphical elements associated with a capture mode or editing mode of the content creation platform, such as GUI elements 242.

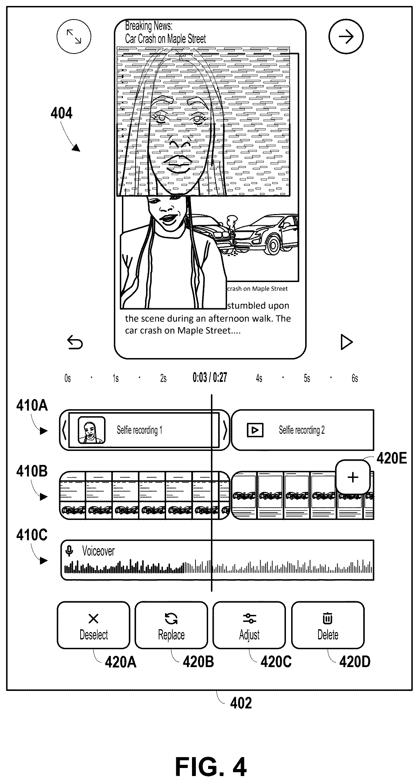

GUI elements 242 of editing mode GUI 240 may be associated with functionality offered by the content creation platform, where the functionality may be for producing and/or editing media content. In the example illustrated with respect to FIG. 2D, a user may select GUI element 242A to exit a current editing mode. A user may select GUI element 242B to add an audio element to the media content. A user may select GUI element 242C to adjust a volume associated with audio of the media content. A user may select GUI element 242D to initiate various functionalities for editing the media content. For example, a user may select GUI element 242D to insert a text element into the media content. A user may select GUI element 242E to initiate a timeline editing mode, e.g., the timeline editing mode discussed with respect to FIG. 4. A user may select GUI element 242F to save the media content to storage components 312 or upload the media content to a content sharing platform.

An example with respect to FIGS. 2A-2D and FIG. 3 will now be provided. In this example, a user is a content creator, and computing device 300 may be the content creator's smartphone. The content creator has recently discovered *Coin Collectors,* a newly-released game application. Enthralled by *Coin Collectors'* unique level design and impressive musical score, the content creator decides to upload gameplay of *Coin Collectors* to a content sharing platform for content consumers to enjoy. The content creator has recently installed a content creation platform on the content creator's smartphone, where the content creation platform implements various aspects of the present disclosure.

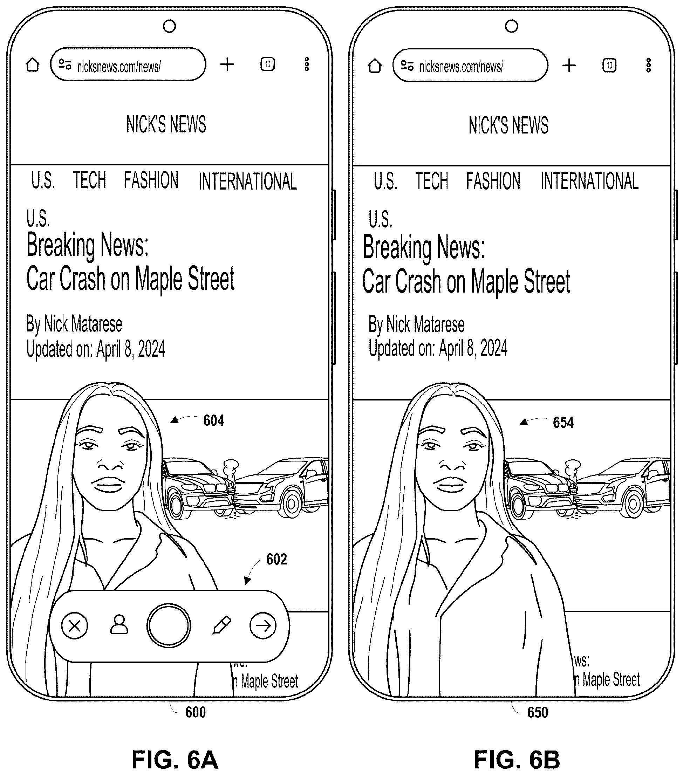

First, the content creator may press and hold two buttons of I/O components 308 to initiate a capture mode of the content creation platform. In some implementations, the content creator may press and hold a single button of I/O components 308 to initiate the capture mode. Responsive to the content creator pressing and holding the button(s), computing device 300 may initiate the capture mode by displaying, via UI device 302, a capture mode GUI (e.g., capture mode GUI 602 shown with respect to FIG. 6A). The capture mode GUI may include various GUI elements for recording and editing media content. The content creator may select a start button element of the capture mode GUI to begin recording.

After the content creator selects the start button element, a front-facing camera component of I/O components 308 (e.g., a "selfie" camera) may begin recording video of the content creator as the content creator interacts with computing device 300. Vision module 320 may provide frame data of the video to overlay module 318 as part of a foreground data stream. Substantially simultaneously, graphics module 322 may begin recording video of content displayed by a screen of computing device 300, where graphics module 322 may exclude, from the recording, one or more layers (e.g., first layer 210) and/or one or more graphical elements associated with the content creation platform (e.g., the capture mode GUI). Graphics module 322 may provide frame data of the video to overlay module 318 as part of a background data stream. Substantially simultaneously, audio module 324 may begin recording audio via a microphone component of I/O components 308 and may provide the audio to overlay module 318 as part of a first audio data stream. Additionally, or alternatively, audio module 324 may begin recording audio generated by computing device 300 for playback via a speaker component of I/O components 308. Audio module 324 may then provide the audio to overlay module 318 as part of a second audio data stream.

The content creator may then launch *Coin Collectors* via computing device 300. As the content creator plays *Coin Collectors,* the content creator may provide commentary and physical expressions. While the content creator plays *Coin Collectors,* graphics module 322 may record the gameplay and provide the resulting frame data to overlay module 318 as a background data stream. Vision module 320 may record images captured by the camera and provide the resulting frame data to overlay module 318 as a foreground data stream. Audio module 324 may record the content creator's commentary and may provide the resulting audio data to overlay module 318 as a first audio data stream. Additionally, audio module 324 may record sound and music generated of *Coin Collectors* and may provide the resulting audio data to overlay module 318 as a second audio data stream.

Overlay module 318 may store data of the received data streams at storage components 312 for later editing during an editing mode. Additionally, or alternatively, overlay module 318 may generate a combined data stream in substantially real-time, where overlay module 318 generates the combined data stream based on one or more of the received data streams. computing device 300 may then store the combined data stream as video content via storage components 312 or may upload the combined data stream as video content to a content sharing platform, as discussed with respect to FIG. 5.

The content creator may continue to play *Coin Collectors* and provide commentary. After some time, the content creator may exit *Coin Collectors* and instead launch a calendar application of applications 316. Each of vision module 320, graphics module 322, and audio module 324 may continue to provide one or more respective data streams to overlay module 318. For instance, graphics module 322 may provide frame data to overlay module 318, where the frames of the frame data depict the content creator closing *Coin Collectors* and navigating to the calendar application via a navigation menu associated with OS 314. The content creator may then discuss a content creation schedule while navigating the calendar application. Additionally, the content creator may pause, resume, or stop recording via a GUI element of the capture mode GUI.

After the content creator stops recording, the content creation platform may initiate an editing mode. During the editing mode, UI device 302 may display GUI 330. As shown in FIG. 3, GUI 330 includes a viewing region for displaying video content, where the video content includes first layer 210 and third layer 230. GUI 330 also includes GUI elements 242 overlapping the video content. During the editing mode, the content creator may use GUI elements 242 to edit the video content. For example, the content creator may apply graphical effects to the video content. In the example illustrated with respect to FIG. 2B and FIG. 3, the content creator may add a text element to superimpose one or more layers of the video content, e.g., text element 222. Responsive to the content creator indicating the text element, overlay module 318 may generate video content based on superimposing the text element, as shown with respect to FIG. 3. Text element 222 is provided as an example. According to various aspects of the present disclosure, the content creator may add media elements from asset repository 326 to the video content.

In some implementations, GUI 330 may be associated with functionality for adding a backdrop graphical element (e.g., a background) to the video content and/or uploading the video content to a content sharing platform. For example, a toolbar element (not illustrated) of GUI 330 may include a selectable graphical element for adding a backdrop graphical element as an additional layer. In this example, a user may select the selectable graphical element and add a green oval backdrop graphical element. The resulting video content may portray actor region 212 superimposing the backdrop graphical element, where both actor region 212 and the backdrop graphical element superimpose second layer 220 and third layer 230. Additionally, or alternatively, the user may select a graphical element of GUI 330 (e.g., GUI element 242F) to initiate functionality of computing device 300 for uploading the video content to a content sharing platform (e.g., a social media platform).

As discussed, overlay module 318 may receive one or more data streams and create a combined data stream based on the one or more data streams. The combined data stream may be associated with video content. For example, the combined data stream may include frame data and/or audio data of the video content. In some implementations, overlay module 318 may save the resulting combined data stream to storage components 312. Additionally, or alternatively, overlay module 318 may upload the combined data stream to a content sharing platform in substantially real-time, such that the content creator may provide live commentary to an audience of content consumers viewing the video content.

The layers and graphical elements provided with respect FIGS. 2A-2D and FIG. 3 are provided as examples. It is conceived that overlay module 318 may superimpose other numbers of layers, with each layer having any number of graphical elements. For example, overlay module 318 may receive a single data stream associated with display content. In this example, overlay module 318 may generate a first layer from a first portion of the data stream, where the first layer is associated with OS display content (e.g., a desktop). Overlay module 318 may generate a second layer from a second portion of the data stream, where the second layer is associated with an actor region and graphical elements. Overlay module 318 may then generate video content by at least superimposing the first and second layers.

In some implementations, computing device 300 may determine if the foreground data stream is associated with a gesture motion. For example, vision module 320 and/or overlay module 318 may implement a trained machine learning model configured to detect user gestures in video frames. Gestures may include any bodily movement, such as pointing, clapping, and waiving. Responsive to determining that the foreground data stream is associated with the gesture, computing device 300 may apply a graphical effect to generated video content based on the gesture. For instance, while vision module 320 records camera input during capture mode, a user may indicate a continuous gesture path by dragging a pointed finger from a first location to a second location, causing a corresponding visual effect to be applied along the gesture path. For example, overlay module 318 may superimpose a light trail, blur effect, or markup effect following the gesture path, giving the appearance that the user is drawing over the video content. Overlay module 318 may apply an image-resizing effect (e.g., a zoom effect) or radial distortion at the gesture's focal point. Additionally, or alternatively, the gesture may trigger a spark effect, ripple animation, or segment transition in the video content.

In one example, a content creator may use computing device 300 to generate video content about a pair of earrings that the content creator recently purchased. The content creator may initiate a capture mode of computing device 300 and, during the capture mode, may use a web browsing application of applications 316 to navigate to a shopping web page advertising the earrings. In this example, overlay module 318 may superimpose a first layer associated with video of the content creator over a second layer associated with the shopping web page. The content creator may point in a direction and, in response, the content creation platform may apply a graphical effect (e.g., a markup effect) to a region of the second layer corresponding to the content creator's pointed finger. For instance, the content creator may appear to point at the earrings on the web page and, in response, the content sharing platform may magnify the earrings in the video content and/or may display a circular graphical element around the earrings in the video content.

FIG. 4 is a conceptual diagram illustrating a timeline GUI for editing video content, in accordance with one or more techniques of this disclosure. As shown in FIG. 4, timeline GUI 402 includes playback region 404, timelines 410A-C (collectively, "timelines 410"), and GUI elements 420A-E (collectively, "GUI elements 420"). UI device 302 may display timeline GUI 402 during a timeline editing mode provided by the content creation platform discussed with respect to FIG. 3. A user may initiate the timeline editing mode by, for example, selecting GUI element 242E.

Timeline GUI 402 includes a layer-editing region comprising timelines 410, where each timeline may be a layer-editing graphical element associated with a respective layer of video content displayed at playback region 404. For instance, timeline 410A may be associated with a first layer, the first layer associated with a foreground data stream. Timeline 410B may be associated with a second layer, the second layer associated with a background data stream. Timeline 410C may be associated with a third layer, the third layer associated with an audio data stream.

A user may edit the video content associated with playback region 404 via timelines 410 and GUI elements 420. For example, computing device 300 may display timeline GUI 402 via a presence-sensitive screen. The user may tap on one or more of timelines 410 to select a respective timeline, causing the respective timeline to enter a selected state. The user may cause timelines to exit selected states by tapping GUI element 420A. The user may tap GUI element 420B to replace selected timelines with other timelines, in turn replacing layers of the video content with other layers. The user may tap GUI element 420C to adjust layers associated with the selected timelines. For example, the user may adjust a playback speed or volume associated with the selected timelines. The user may tap GUI element 420D to delete selected timelines. The user may tap GUI element 420E to add timelines to the layer-editing region or add media elements (e.g., graphical or audio elements) to selected timelines based on available media elements stored at asset repository 326.

As shown with respect to FIG. 4, a user may segment layers of video content to produce transitions. For example, a user may record first content during capture mode. The user may pause or stop the recording and may later record second content. The user may name the first content "Selfie recording 1" and the second content "Selfie recording 2." During an editing mode (e.g., a timeline editing mode), the user may edit the video content associated with playback region 404 by causing a layer of the video content to transition from the first content to the second content. Additionally, the user may add transition effects. For instance, the user may apply a crossfade effect, a wipe transition, or other visual effects to create a seamless change between the first content and the second content. The transition effect may be configured with adjustable parameters, such as duration, opacity, or motion, to customize the appearance of the transition. Furthermore, the user may preview the applied transition in real-time and adjust the transition before finalizing the video content.

FIG. 5 is a conceptual diagram illustrating various devices in communication with a content sharing platform via a network, in accordance with one or more techniques of this disclosure. Content creator device 500 may be a computing device that generates digital content (e.g., video content) and uploads the digital content to content sharing platform 504 via network 502. In the example illustrated with respect to FIG. 5, content sharing platform 504 acts as an intermediary that processes content, stores content, and manages the distribution of content to content consumer devices 550A-N (collectively, "content consumer devices 550"). Content consumer devices 550 may be endpoints where users access digital content distributed by content sharing platform 504. Examples of content consumer devices include smartphones, tablets, and smart televisions.

Content sharing platform 504 may act as an intermediary between content creator device 500 and content consumer devices 550 by receiving media content from content creator device 500 and distributing the media content to content consumer devices 550. For example, content creator device 500 may upload video content to content sharing platform 504. Content sharing platform 504 may store the video content for later access by content consumer devices 550. Additionally, or alternatively, content creator device 500 may stream media content to content sharing platform 504 via a real-time streaming protocol such as Real-Time Messaging Protocol (RTMP), Secure Reliable Transport (SRT), or Web Real-Time Communication (WebRTC). Content sharing platform 504 may then distribute the stream to content consumer devices 550, such that content consumers may view the media content in substantially real-time.

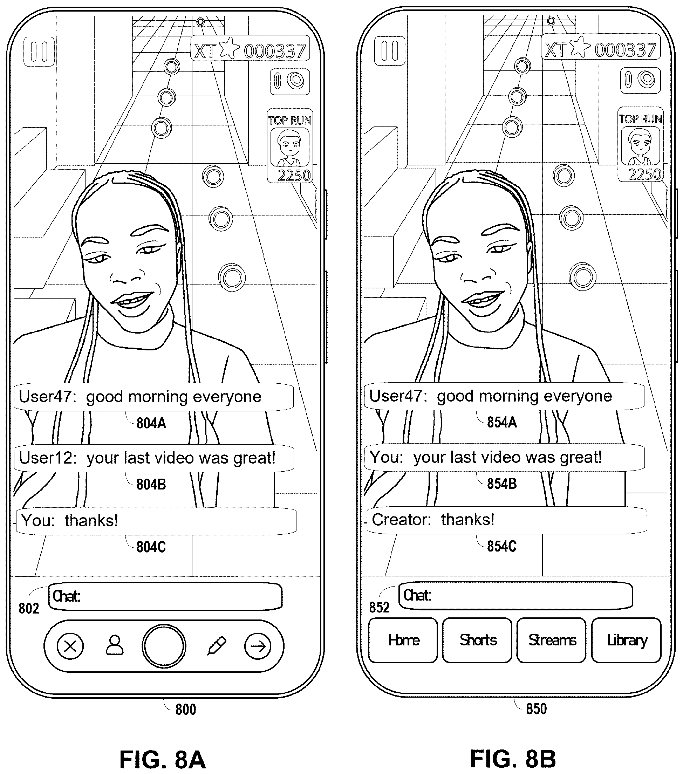

It is conceived that content creator device 500 may generate media content according to the techniques described with respect to this disclosure and may transmit the media content directly to a content consumer device via network 502. As discussed herein with respect to FIG. 8A and FIG. 8B, the content consumer device (e.g., content consumer device 550A) may exchange interaction data with content creator device 500 based on the media content. In some examples, content creator device 500 and one or more other devices may conduct a virtual meeting (e.g., a video call or video chat) using techniques of the present disclosure. For example, it is conceived that a first device and a second device may each include the content creation platform discussed with respect to the present disclosure. The first device may video call the second device by transmitting video content to the second device in substantially real-time, where the first device generates the video content via the content creation platform. The second device may partake in the video call by, for example, transmitting video content to the first device in substantially real time, where the second device generates the video content via the content creation platform. In this way, a first user may video call a second user, where both users appear displayed over a digital background (e.g., one associated with an active application) during the call.

FIG. 6A is a conceptual diagram illustrating a capture mode GUI superimposing created content, in accordance with one or more techniques of this disclosure. FIG. 6B is a conceptual diagram illustrating created content, in accordance with one or more techniques of this disclosure. Content creator device 600 may be an example of content creator device 500 and/or computing device 300. Content consumer device 650 may be an example of content consumer device 550A, where content consumer device 650 displays video content streamed from content consumer device 600. In the example illustrated with respect to FIG. 6A and FIG. 6B, a user (e.g., a content creator) discusses a news article regarding a car crash.

FIG. 6A includes content creator device 600. The graphical elements seen with respect to FIG. 6A may be the graphical elements a user sees when content creator device 600 generates video content in a capture mode. For instance, the user may initiate a capture mode of content creator device 600 via one or more techniques discussed with respect to FIG. 1 and FIG. 3. During the capture mode, content creator device 600 may display capture mode GUI 602.

Capture mode GUI 602 may include selectable GUI elements for performing functions associated with the capture mode. For example, capture mode GUI 602 may include a GUI element for exiting the capture mode. Capture mode GUI 602 may also include a GUI element for disabling one or more layers or graphical elements from display at content creator device 600. Capture mode GUI 602 may also include a GUI element for starting, stopping, pausing, and/or unpausing a recording. Capture mode GUI 602 may further include a GUI element for inserting graphical elements and/or assets into the video content. Capture mode GUI 602 may also include a GUI element for editing the video content via an editing mode. Furthermore, capture mode GUI 602 may include a GUI element for uploading the video content to a content sharing platform.

The user may adjust various aspects of the video content during capture mode. For example, the user may use a finger or cursor to select layers and/or graphical elements and drag the layers and/or graphical elements to a different position in the video content. The user may, for instance, use a finger to drag actor region 604 to appear in a different location in the video content. In response, actor region 654 may relocate based on the different location of actor region 604. The user may also resize actor region 604, causing an actor of actor region 604 and actor region 654 to appear larger or smaller within the video content. The user may also add, to the video content, a backdrop graphical element associated with actor region 604, such that the video content may display the user as being in front of a backdrop distinguishable from the remainder of the video content. For example, a pink rectangular graphical element may appear as being behind actor region 604 and in front of the remaining video content (e.g., the news article). Additionally, or alternatively, the user may adjust (e.g., add, remove, resize, or reshape) the backdrop graphical element and/or adjust (e.g., add, remove, resize, or reshape) a mask associated with actor region 604.

In some implementations, content creator device 600 may generate, via a machine learning model, one or more effects based on the video content. Content creator device 600 may then apply the one or more effects to the video content. For example, a machine learning model may receive, as input, one or more layers of the video content and may apply graphical effects from asset repository 326 based on recognized gestures or content. In one example, a user points at themselves while recording video content. In response to recognizing the user pointing to themselves, the machine learning model may adjust a brightness of layers in the video content that do not include an actor region. In another example, a user puckers the user's lips. In response to recognizing the user puckering the user's lips, the machine learning model may insert heart-shaped graphical elements into the video content.

As discussed, capture mode GUI 602 may also include a GUI element for starting, stopping, pausing, and/or unpausing a recording. In one example, a content creator may use content creator device 600 to create a how-to video about digital painting. The content creator may start a recording before discussing the fundamentals of digital painting. The content creator may then pause the recording and subsequently complete a digital landscape painting. The content creator may then unpause the recording and discuss the digital landscape painting. The resulting video content may portray, as a first segment, the content creator discussing the fundamentals of digital painting. The resulting video content may then transition to the content creator discussing the digital landscape painting as a second segment. The content creator may edit the two segments during an editing mode, e.g., the timeline editing mode discussed with respect to FIG. 4. For instance, the content creator may add a transition effect between the first segment and the second segment.

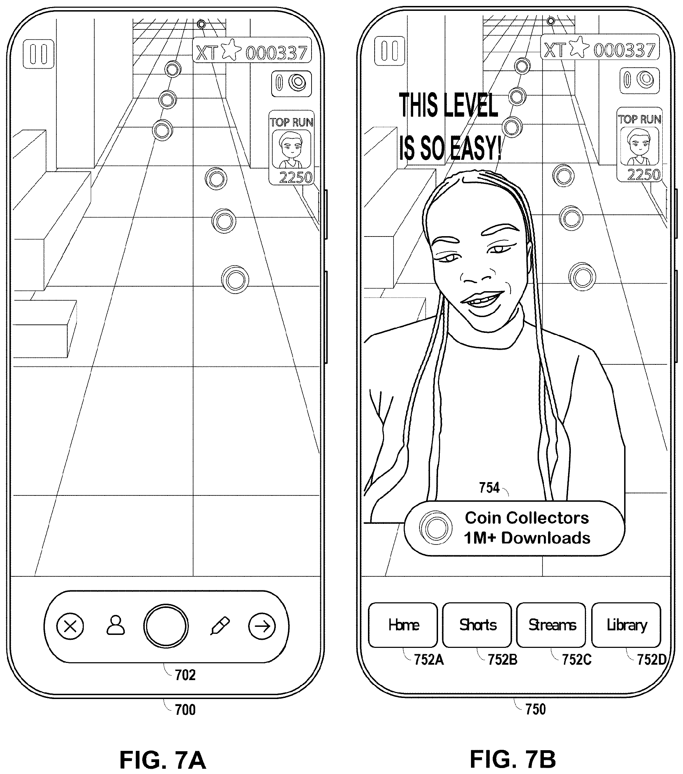

FIG. 7A is a conceptual diagram illustrating a capture mode GUI, in accordance with one or more techniques of this disclosure. FIG. 7B is a conceptual diagram illustrating a content consumer GUI including a suggestive graphical element, in accordance with one or more techniques of this disclosure. Content creator device 700 may be an example of content creator device 500 and/or computing device 300. Content consumer device 750 may be an example of content consumer device 550A, where content consumer device 750 displays video content streamed from content consumer device 700.

In some implementations, content creator device 700 may be configured to enable or disable display of graphical elements associated with a capture mode. As discussed and illustrated with respect to FIG. 3, during capture mode, computing device 300 may superimpose layers and/or graphical elements over content displayed at UI device 302. In this way, computing device 300 may provide a user with a visual reference as to video content produced by overlay module 318. However, the user may want to disable display of the superimposed content at UI device 302. In the example illustrated with respect to FIG. 7A, a user of computing device 700 may want to focus on the gameplay displayed at computing device 700. The user may select a GUI element of capture mode GUI 702 to disable overlay, resulting in the displayed content illustrated with respect to FIG. 7A. As illustrated with respect to FIG. 7B, content consumer device 750 may display the video content generated by content creator device 700. In this way, a content consumer viewing video content generated by computing device 700 may still see the layers and/or graphical elements not displayed at computing device 700.

Content consumer device 750 may display a GUI associated with a content sharing platform, e.g., content sharing platform 504. In the example illustrated with respect to FIG. 7B, content consumer device 750 displays a content sharing platform GUI comprising GUI elements 752A-D (collectively, "GUI elements 752"). A content consumer may access content of content sharing platform 504 via GUI elements 752. As discussed, content consumer device 750 may display video content generated by content creator device 700. Content consumer device 700 may access the video content via content sharing platform 504, where content sharing platform 504 may store the video content for viewing on-demand or may live-stream the video content to content consumer device 700 in substantially real-time.

In some implementations, content consumer device 700 may determine one or more suggestive actions based on metadata associated with a background data stream. Content consumer device 700 may then superimpose one or more suggestive graphical elements over video content, where the suggestive graphical element(s) are based on a respective suggestive action of the suggestive action(s). For example, content consumer device 700 may retrieve metadata indicative of at least a portion of content associated with a background data stream (e.g., a website URL, application metadata, a game title, a movie identifier, a music track ID, an eBook title, a podcast episode name, a news article headline, a social media post link, a digital advertisement ID, a software version number, a live stream channel identifier, an online course module name, and/or a cloud gaming session ID). Content consumer device 700 may determine functionality associated with the metadata (e.g., one or more suggestive actions), where the determination may be via a machine learning model. The functionality associated with the metadata may include, for example, opening an application associated with the background data stream and/or navigating to an internet hyperlink associated with the background data stream. Content consumer device 700 may also generate one or more suggestive graphical elements based on the functionality associated with the metadata, including visual and/or audio aspects of the suggestive graphical element(s).

A user may trigger the functionality associated with the metadata by selecting the suggestive graphical element. In the example illustrated with respect to FIG. 7A and FIG. 7B, content creator device 700 generates suggestive graphical element 754 and superimposes suggestive graphical element 754 over video content. Content consumer device 750 displays the video content, including suggestive graphical element 754. A content consumer may select suggestive graphical element 754 and, in response, content consumer device 750 may launch a virtual store application and navigate to a store page associated with *Coin Collectors.* Content creator device 700 may generate the associated functionality, coin icon, the "Coin Collectors" text, and the "1M+ Downloads" text of suggestive graphical element 754 based on the machine learning model and/or information associated with the background data stream, e.g., metadata.

FIG. 8A is a conceptual diagram illustrating a capture mode GUI including interaction graphical elements, in accordance with one or more techniques of this disclosure. FIG. 8B is a conceptual diagram illustrating a content consumer GUI including interaction graphical elements, in accordance with one or more techniques of this disclosure. Content creator device 800 may be an example of content creator device 500 and/or computing device 300. Content consumer device 850 may be an example of content consumer device 550A, where content consumer device 850 displays video content streamed from content consumer device 800. Content creator device 800 displays a GUI including text input region 802 and interaction graphical elements 804A-C (collectively, "interaction graphical elements 804"). Content consumer device 850 displays a GUI including text input region 852 and interaction graphical elements 854A-C (collectively, "interaction graphical elements 854"). In the example illustrated with respect to FIG. 8A and FIG. 8B, a user (e.g., a content creator) may stream media content from content creator device 800 to content consumer device 850 using techniques described with respect to the present disclosure.

As discussed, content creator device 800 may generate video content for upload to a content sharing platform. In some implementations, content creator device 800 may receive interaction data including text data provided by one or more user devices receiving the video content via the content sharing platform. Content creator device 800 may generate one or more interaction layers including one or more interaction graphical elements associated with the text data. Content creator device 800 may then superimpose the interaction layer(s) over layers of the video content.

In the example illustrated with respect to FIG. 8A and FIG. 8B, content creator device 800 may upload video content to a content sharing platform (e.g., content sharing platform 504). Content consumer device 850 may access a live stream of the video content from the content sharing platform. Content creator device 800 and content consumer device 850 may exchange interaction data via the content sharing platform. For instance, a content creator may provide text input via text input region 802, where a graphical keyboard (not illustrated) enables text input responsive to the content creator selecting text input region 802. Similarly, a content consumer may provide text input via text input region 852, where a graphical keyboard (not illustrated) enables text input responsive to the content consumer selecting text input region 852.

Content creator device 800 may transmit interaction data to the content sharing platform, where the interaction data includes text data associated with text input. The content sharing platform may transmit the interaction data to content consumer device 850. Similarly, content consumer device 850 may transmit interaction data to the content sharing platform, where the interaction data includes text data associated with text input. The content sharing platform may transmit the interaction data to content creator device 800 and/or content consumer device 850. In response to receiving interaction data including text data, content creator device 800 may display text associated with the text data via interaction graphical elements 804. In response to receiving interaction data including text data, content consumer device 800 may display text associated with the text data via interaction graphical elements 854. In this way, content creators may interact with content consumers in substantially real-time while the content creator simultaneously produces video content according to the techniques described with respect to the present disclosure.

In some implementations, the interaction data may include audio data. For instance, a content consumer may speak into a microphone of content consumer device 850. Content consumer device 850 may generate audio data via the microphone based on the content consumer's speech. Content consumer device 850 may upload interaction data to a content sharing platform or may transmit the interaction data directly to content creator device 800 via a network, where the interaction data includes the audio data. In response to receiving the interaction data, the content sharing platform may transmit the interaction data to content creator device 800. Content creator device 800 may then output audio associated with the audio data.

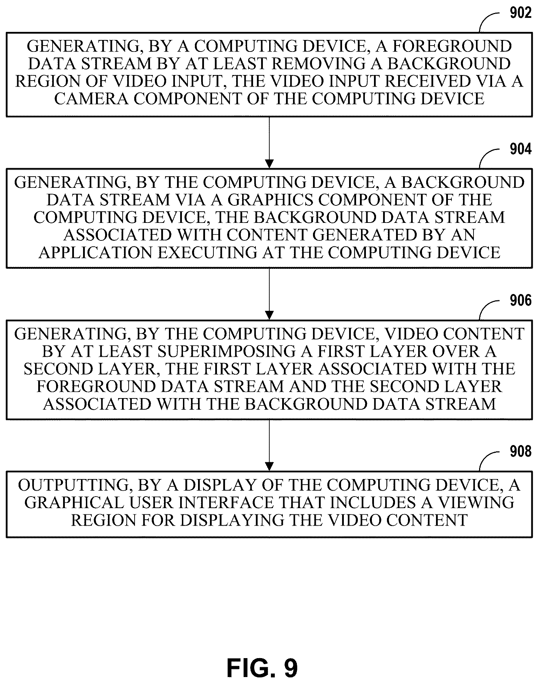

FIG. 9 is a flowchart illustrating an example operation for superimposing self-capture content over a digital background, in accordance with one or more techniques of this disclosure. The example of FIG. 9 is described with respect to FIG. 3.

A technique for producing video content may include generating, by a computing device, a foreground data stream by at least removing a background region of video input, the video input received via a camera component of the computing device (902). For example, a camera component of I/O components 308 may record camera content of a content creator during a capture mode. Vision module 320 may apply a mask to individual frames of the camera content prior to providing the frames to overlay module 318 as part of a foreground data stream. Additionally, or alternatively, vision module 320 may store the individual frames via storage components 312 and may later apply a mask to the frames and/or provide the frames to overlay module 318 as part of a foreground data stream.

The technique may also include generating, by the computing device, a background data stream via a graphics component of the computing device, the background data stream associated with content generated by an application executing at the computing device (904). For instance, a content creator may access an application (e.g., a game application or a web application of applications 316) during a capture mode. Graphics module 322 may provide visual content of the application (e.g., visual content generated by a graphics component for display at UI device 302) to overlay module 318 as part of a background data stream.

The technique may additionally include generating, by the computing device, video content by at least superimposing a first layer over a second layer, the first layer associated with the foreground data stream and the second layer associated with the background data stream (906). For instance, as shown with respect to FIG. 3, overlay module 318 may superimpose each of first layer 210, second layer 220, and third layer 230 to produce video content. Overlay module 318 may superimpose each of the layers in substantially real-time to provide a live feed of the video content to a content sharing platform or a content consumer device via a network. Additionally, or alternatively, overlay module 318 may store data associated with each of the layers in storage components 312 for later editing during an edit mode.

The technique may further include outputting, by a display of the computing device, a GUI that includes a viewing region for displaying the video content (908). For instance, as shown with respect to FIG. 6A, content creator device 600 displays a GUI including capture mode GUI 602 and a viewing region for displaying video content, the viewing region including actor region 604 and background content.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media, which is non-transitory or (2) a communication medium such as a signal or carrier wave. Data storage media may be any available media that may be accessed by one or more computers or one or more processors to retrieve instructions, code and/or data structures for implementation of the techniques described in this disclosure. A computer program product may include a computer-readable medium.

By way of example, and not limitation, such computer-readable storage media may comprise random-access memory, read-only memory, EEPROM, CD-ROM or other optical disk storage, magnetic disk storage, or other magnetic storage devices, flash memory, or any other storage medium that may be used to store desired program code in the form of instructions or data structures and that may be accessed by a computer. Also, any connection is properly termed a computer-readable medium. For example, if instructions are transmitted from a website, server, or other remote source using a coaxial cable, fiber optic cable, twisted pair, digital subscriber line, or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors, general purpose microprocessors, application specific integrated circuits, field programmable logic arrays, or other equivalent integrated or discrete logic circuitry. Accordingly, the term "processor," as used herein may refer to any of the foregoing structures or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit or a set of integrated circuits (e.g., a chip set). Various components, modules, or units are described in this disclosure to emphasize functional aspects of devices configured to perform the disclosed techniques, but do not necessarily require realization by different hardware units. Rather, various units may be combined in a hardware unit or provided by a collection of intraoperative hardware units, including one or more processors, in conjunction with suitable software and/or firmware.

It is to be recognized that, depending on the example, certain acts or events of any of the techniques described herein may be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In some examples, a computer-readable storage medium comprises a non-transitory medium. The term "non-transitory" indicates that the storage medium is not embodied in a carrier wave or a propagated signal. In certain examples, a non-transitory storage medium may store data that can, over time, change (e.g., in random-access memory or cache).

Example 1: A method includes generating, by a computing device, a foreground data stream by at least removing a background region of video input, the video input received via a camera component of the computing device; generating, by the computing device, a background data stream via a graphics component of the computing device, the background data stream associated with content generated by an application executing at the computing device; generating, by the computing device, video content by at least superimposing a first layer over a second layer, the first layer associated with the foreground data stream and the second layer associated with the background data stream; and outputting, by a display of the computing device, a graphical user interface that includes a viewing region for displaying the video content.

Example 2: The method of example 1, further including determining, by the computing device, whether the foreground data stream is associated with a gesture motion; and responsive to determining that the foreground data stream is associated with the gesture motion, applying, by the computing device, a graphical effect to the video content based on the gesture motion.

Example 3: The method of example 2, wherein the graphical effect is a markup effect.

Example 4: The method of any of examples 2 and 3, wherein the graphical effect is an image-resizing effect.

Example 5: The method of any of examples 1 through 4, further including determining, by the computing device, one or more suggestive actions based on metadata associated with the background data stream; and superimposing, by the computing device, one or more suggestive graphical elements over the video content, each suggestive graphical element of the one or more suggestive graphical elements based on a respective suggestive action of the one or more suggestive actions.

Example 6: The method of any of examples 1 through 5, wherein the graphical user interface further includes a layer-editing region for displaying one or more layer-editing graphical elements, each of the one or more layer-editing graphical elements associated with a respective layer of the video content.

Example 7: The method of any of examples 1 through 6, further including generating, by the computing device via a machine learning model, one or more effects based on the video content; and applying, by the computing device, the one or more effects to the video content.

Example 8: The method of any of examples 1 through 7, further including uploading, by the computing device, the video content to a content sharing platform.

Example 9: The method of example 8, further including receiving, by the computing device, interaction data, the interaction data including text data provided by one or more user devices receiving the video content via the content sharing platform; and generating, by the computing device, a third layer superimposing the first layer and the second layer, the third layer including one or more interaction graphical elements associated with the text data.

Example 10: A computing device includes one or more processors; and one or more storage devices storing instructions that, when executed by the one or more processors, cause the one or more processors to: generate a foreground data stream by at least removing a background region of video input, the video input received via a camera component of the computing device; generate a background data stream via a graphics component of the computing device, the background data stream associated with content generated by an application executing at the computing device; generate video content by at least superimposing a first layer over a second layer, the first layer associated with the foreground data stream and the second layer associated with the background data stream; and output a graphical user interface that includes a viewing region for displaying the video content.

Example 11: The computing device of example 10, wherein the instructions further cause the one or more processors to: determine whether the foreground data stream is associated with a gesture motion; and responsive to determining that the foreground data stream is associated with the gesture motion, apply a graphical effect to the video content based on the gesture motion.

Example 12: The computing device of example 11, wherein the graphical effect is a markup effect.

Example 13: The computing device of any of examples 11 and 12, wherein the graphical effect is an image-resizing effect.

Example 14: The computing device of any of examples 10 through 13, wherein the instructions further cause the one or more processors to: determine one or more suggestive actions based on metadata associated with the background data stream; and superimpose one or more suggestive graphical elements over the video content, each suggestive graphical element of the one or more suggestive graphical elements based on a respective suggestive action of the one or more suggestive actions.

Example 15: The computing device of any of examples 10 through 14, wherein the graphical user interface further includes a layer-editing region for displaying one or more layer-editing graphical elements, each of the one or more layer-editing graphical elements associated with a respective layer of the video content.

Example 16: The computing device of any of examples 10 through 15, wherein the instructions further cause the one or more processors to: generate, via a machine learning model, one or more effects based on the video content; and apply the one or more effects to the video content.

Example 17: The computing device of any of examples 10 through 16, wherein the instructions further cause the one or more processors to upload the video content to a content sharing platform.

Example 18: The computing device of example 17, wherein the instructions further cause the one or more processors to: receive interaction data, the interaction data including text data provided by one or more user devices receiving the video content via the content sharing platform; and generate a third layer superimposing the first layer and the second layer, the third layer including one or more interaction graphical elements associated with the text data.

Example 19: A non-transitory computer-readable storage medium including instructions, that when executed by one or more processors of a computing device, cause the one or more processors to: generate a foreground data stream by at least removing a background region of video input, the video input received via a camera component of the computing device; generate a background data stream via a graphics component of the computing device, the background data stream associated with content generated by an application executing at the computing device; generate video content by at least superimposing a first layer over a second layer, the first layer associated with the foreground data stream and the second layer associated with the background data stream; and output a graphical user interface that includes a viewing region for displaying the video content.

Example 20: The non-transitory computer-readable storage medium of example 19, where the one or more processors further execute the instructions to: determine whether the foreground data stream is associated with a gesture motion; and responsive to determining that the foreground data stream is associated with the gesture motion, apply a graphical effect to the video content based on the gesture motion.

Example 21: The non-transitory computer-readable storage medium of example 20, wherein the graphical effect is a markup effect.

Example 22: The non-transitory computer-readable storage medium of any of examples 20 and 21, wherein the graphical effect is an image-resizing effect.

Example 23: The non-transitory computer-readable storage medium of any of examples 19 through 22, wherein the one or more processors further execute the instructions to: determine one or more suggestive actions based on metadata associated with the background data stream; and superimpose one or more suggestive graphical elements over the video content, each suggestive graphical element of the one or more suggestive graphical elements based on a respective suggestive action of the one or more suggestive actions.

Example 24: The non-transitory computer-readable storage medium of any of examples 19 through 23, wherein the graphical user interface further includes a layer-editing region for displaying one or more layer-editing graphical elements, each of the one or more layer-editing graphical elements associated with a respective layer of the video content.

Example 25: The non-transitory computer-readable storage medium of any of examples 19 through 24, wherein the one or more processors further execute the instructions to: generate, via a machine learning model, one or more effects based on the video content; and apply the one or more effects to the video content.

Example 26: The non-transitory computer-readable storage medium of any of examples 19 through 25, wherein the one or more processors further execute the instructions to upload the video content to a content sharing platform.

Example 27: The non-transitory computer-readable storage medium of example 26, wherein the one or more processors further execute the instructions to: receive interaction data, the interaction data including text data provided by one or more user devices receiving the video content via the content sharing platform; and generate a third layer superimposing the first layer and the second layer, the third layer including one or more interaction graphical elements associated with the text data.

Example 28: A computing system comprising means for performing any combination of examples 1 through 9.

Example 29: A computer program product comprising one or more instructions that, when executed by a computing device, cause the computing device to perform any combination of examples 1 through 9.

## Claims

1. A method comprising:
generating, by a computing device, a foreground data stream by at least removing a background region of video input, the video input received via a camera component of the computing device;
generating, by the computing device, a background data stream via a graphics component of the computing device, the background data stream associated with content generated by an application executing at the computing device;
generating, by the computing device, video content by at least superimposing a first layer over a second layer, the first layer associated with the foreground data stream and the second layer associated with the background data stream; and
outputting, by a display of the computing device, a graphical user interface that includes a viewing region for displaying the video content.

2. The method of claim 1, further comprising:
determining, by the computing device, whether the foreground data stream is associated with a gesture motion; and
responsive to determining that the foreground data stream is associated with the gesture motion, applying, by the computing device, a graphical effect to the video content based on the gesture motion.

3. The method of claim 2, wherein the graphical effect is a markup effect.

4. The method of claim 2, wherein the graphical effect is an image-resizing effect.

5. The method of any of claims 1-4, further comprising:
determining, by the computing device, one or more suggestive actions based on metadata associated with the background data stream; and
superimposing, by the computing device, one or more suggestive graphical elements over the video content, each suggestive graphical element of the one or more suggestive graphical elements based on a respective suggestive action of the one or more suggestive actions.

6. The method of any of claims 1-5, wherein the graphical user interface further includes a layer-editing region for displaying one or more layer-editing graphical elements, each of the one or more layer-editing graphical elements associated with a respective layer of the video content.

7. The method of any of claims 1-6, further comprising:
generating, by the computing device via a machine learning model, one or more effects based on the video content; and
applying, by the computing device, the one or more effects to the video content.

8. The method of any claims 1-7, further comprising uploading, by the computing device, the video content to a content sharing platform.

9. The method of claim 8, further comprising:
receiving, by the computing device, interaction data, the interaction data including text data provided by one or more user devices receiving the video content via the content sharing platform; and
generating, by the computing device, a third layer superimposing the first layer and the second layer, the third layer including one or more interaction graphical elements associated with the text data.

10. A computing device comprising:
one or more processors; and
one or more storage devices storing instructions that, when executed by the one or more processors, cause the one or more processors to perform a method according to any of claims 1 - 9

11. A non-transitory computer-readable storage medium comprising instructions, that when executed by one or more processors of a computing device, cause the one or more processors to perform a method according to any of claims 1 - 9.
